# EUROPEAN PATENT SPECIFICATION

(11) **EP 1 513 039 B1**
(45) Date of publication and mention of the grant of the patent: **28.02.2007**
(21) Application number: 03019882.4
(22) Date of filing: 02.09.2003
(51) Int. Cl.: G06F 21/20

(54) **Transfer of security data between two memories**
Übertragung von sicherheitsrelevanten Daten zwischen zwei Speichern
Transfert de données de sécurité entre deux mémoires

(43) Date of publication of application: 09.03.2005
(73) Proprietor: Sony Ericsson Mobile Communications AB, 221 88 Lund (SE)
(72) Inventor: Lutnaes, Sturla, 75645 Uppsala (SE)
(74) Representative: Dahnér, Christer

(56) References cited:
- US-A- 5 491 827
- US-A- 5 561 817
- US-A- 5 634 099
- US-A- 5 825 875
- US-A- 5 825 878
- US-A- 6 115 819

## Description

### TECHNICAL FIELD OF THE INVENTION

The present invention relates to the field of safe transfer of security data from one memory to another in an electronic data processing environment. In particular the present invention relates to a method of transferring data from a non-volatile memory to a working memory of an electronic data processing device, such an electronic data processing device as well as to a device for blocking write attempts.

### DESCRIPTION OF RELATED ART

The cellular phones of today have more and more different functions and applications in them. One such function is the possibility to make economical transactions. In performing transactions there is normally used security data in the form of private encryption keys. The storage of these keys has to be safe and safeguarded from manipulation.

In relation to cellular phones these keys have up till now been stored in so-called NOR flash memories. These known memories are of the type XIP (execute in place), which means that the keys are not moved from the memory. It is today possible to block writing of the position of such keys on such a memory using hardware solutions. Such solutions monitor program execution and data access on the system bus inside the phone. Software code that is not part of the authenticated firmware of the device is prevented from accessing the keys. These solutions assume that at least the firmware and possibly the keys are located in an XIP memory, so that address patterns on the bus are fixed for any given execution sequence.

US 6115819 describes a secure computer architecture having a central processing unit, memories, a trusted access monitor device and a trusted gateway device. Each memory location has a tag representative of a security related attribute associated with the data in that memory. The access monitor device has tags representative of other security aspects of the processes that can be processed by the central processing unit. When the central processing unit attempts to perform an access of data in a memory location, the access monitor device compares the respective tags and controls one-way or two-way direction of the signals through a respective gateway device.

The NOR flash memories mentioned above are however relatively expensive, why there is a trend to replace them with so-called NAND flash memories, which are cheaper. These memories are however not of the XIP type, and in order to use the content stored on them, the content has to be moved or copied to a working memory of the phone.

There is therefore a need for being able to protect such security data from manipulation when it is being moved from the NAND flash memory to the working memory.

It is furthermore often desirable to provide such a protection independently of the central processing of the unit, since otherwise other units such as a debugging unit, which is often a part of the phone for development reasons, can influence such security information.

### SUMMARY OF THE INVENTION

The present invention is thus directed towards solving the problem of protecting the security data from manipulation, when it is moved from a non-volatile memory to a working memory as well as after such relocation.

The object of the invention is achieved with the features of the appended claims.

This is achieved by copying data from the non-volatile memory to the working memory, which data includes security data to be write-protected, activating blocking of the security data in the working memory, monitoring all communication with the working memory, and blocking all write attempts to the copied security data stored in the working memory, where activating blocking, monitoring communication and blocking write attempts are performed independently of the central processing unit of the data processing device, such that the central processing unit cannot manipulate the security data.

One object of the present invention is to provide a method that protects security data from manipulation when the data is moved from a non-volatile memory to a working memory as well as after such relocation.

According to a first aspect of the present invention, the object is achieved by a method of transferring data from a non-volatile memory to a working memory of an electronic data processing device, comprising the steps of:
copying data from the non-volatile memory to the working memory, which data includes security data to be write-protected,
activating a blocking of the security data in the working memory,
monitoring all communication with the working memory, and
blocking all write attempts to the copied security data stored in the working memory,
wherein at least the steps of activating a blocking, monitoring communication and blocking write attempts are performed independently of the central processing unit of the data processing device, such that the central processing unit cannot manipulate the security data.

A second aspect of the present invention is directed to a method including the features of the first aspect, wherein the area of the security data in the non-volatile memory is pre-defined and pre-stored in a device for blocking write attempts and used at least in relation to activating a blocking.

A third aspect of the present invention is directed towards a method including the features of the first aspect, wherein the step of copying data comprises copying only the security data from the non-volatile memory to the working memory independently of the central processing unit of the data processing device and copying any further data under the control of the central processing unit of the device.

A fourth aspect of the present invention is directed towards a method including the features of the third aspect, wherein the area of the security data in the non-volatile memory and the area for storage of the security data in the working memory are pre-defined and wherein the step of activating a blocking of positions of the working memory is triggered by the copying being made to the pre-defined area in the working memory and the blocking is activated for said area.

A fifth aspect of the present invention is directed towards a method including the features of the first aspect, wherein the step of copying comprises copying all data from the non-volatile memory to the working memory under the control of the central processing unit of the device.

A sixth aspect of the present invention is directed towards a method including the features of the fifth aspect, wherein the area of the security data in the non-volatile memory is pre-defined and wherein the step of activating a blocking is triggered by a first detection of copying of security data from the pre-defined area in the non-volatile memory to an area of the working memory and the blocking is activated for that area of the working memory.

A seventh aspect of the present invention is directed towards a method including the features of the first aspect, wherein the step of blocking is achieved by changing the destination address of the data transferred to the working memory.

An eighth aspect of the present invention is directed towards a method including the features of the first aspect, further comprising the steps of disconnecting a debugging unit at least when copying the security data to the working memory and reconnecting the debugging unit when the blocking has been activated.

Another object of the present invention is to provide a device for blocking write attempts to security data that protects security data from manipulation when the data is moved from a non-volatile memory to a working memory as well as after such relocation.

According to a ninth aspect of the present invention, this object is achieved by a device for blocking write attempts to security data transferred from a non-volatile memory to a working memory in an electronic data processing environment that includes a central processing unit and comprising:
a monitoring unit arranged to:
   activate a blocking of the security data in the working memory upon copying of the security data from the non-volatile memory to the working memory, monitor all communication with the working memory, and
   block all write attempts to the copied security data stored in the working memory,
   all performed independently of the central processing unit of the data processing environment, such that the central processing unit cannot manipulate the security data.

A tenth aspect of the present invention is directed towards a method including the features of the ninth aspect, wherein the area of the security data in the non-volatile memory is pre-defined and pre-stored in the device and used in relation at least to activating a blocking.

An eleventh aspect of the present invention is directed towards a device including the features of the ninth aspect, further comprising a copy control unit arranged to copy the security data from the non-volatile memory to the working memory also independently of the central processing unit of the data processing environment.

A twelfth aspect of the present invention is directed towards a device including the features of the eleventh aspect, where the area of the security data in the non-volatile memory and the area for storage of the security data in the working memory are pre-defined and pre-stored in the device and the monitoring unit when activating a blocking is triggered by the copying being made to the pre-defined area in the working memory and activates a blocking of that area.

A thirteenth aspect of the present invention is directed towards a device including the features of the ninth aspect, where the area of the security data in the non-volatile memory is pre-defined and pre-stored in the device and the monitoring unit when activating a blocking is triggered by a first detection of copying of security data from the pre-defined area in the non-volatile memory to an area of the working memory and activating a blocking for that area of the working memory.

A fourteenth aspect of the present invention is directed towards a device including the features of the ninth aspect, wherein the monitoring unit is arranged to block write attempts by changing the destination address of data transferred to the working memory.

A fifteenth aspect of the present invention is directed towards a device including the features of the ninth aspect, wherein the monitoring unit is arranged to disconnect a debugging unit of the electronic data processing environment at least when the security data is copied to the working memory and to reconnect the debugging unit when the blocking has been activated.

A sixteenth aspect of the present invention is directed towards a device including the features of the ninth aspect, wherein it is implemented in hardware.

Yet another object is to provide an electronic data processing device that protects security data from manipulation when the data is moved from a non-volatile memory to a working memory as well as after such relocation.

According to a seventeenth aspect of the present invention, this object is achieved by an electronic data processing device comprising:
a non-volatile memory comprising data including security data to be write-protected,
a working memory,
a central processing unit arranged to control copying of at least some data from the non-volatile memory to the working memory, and
a device for blocking write attempts to security data transferred from the non-volatile memory to the working memory and comprising a monitoring unit arranged to:
   activate a blocking of the security data in the working memory upon copying of the security data from the non-volatile memory to the working memory,
   monitor all communication with the working memory, and
   block all write attempts to the copied security data stored in the working memory,
   all performed independently of the central processing unit, such that the central processing unit cannot manipulate the security data.

An eighteenth aspect of the present invention is directed towards a device including the features of the seventeenth aspect, wherein the area of the security data in the non-volatile memory is pre-defined and pre-stored in the device for blocking write attempts and used in relation at least to activating a blocking.

A nineteenth aspect of the present invention is directed towards a device including the features of the seventeenth aspect, wherein the device for blocking write attempts further comprises a copy control unit arranged to copy the security data from the non-volatile memory to the working memory independently of the central processing unit and the central processing unit is arranged to control the copying of further data from the non-volatile memory to the working memory.

A twentieth aspect of the present invention is directed towards a device including the features of the nineteenth aspect, where the area of the security data in the non-volatile memory and the area for storage of the security data in the working memory are pre-defined and pre-stored in the device for blocking write attempts and the monitoring unit when activating a blocking is triggered by the copying being made to the pre-defined area in the working memory and activates a blocking of that area.

A twenty-first aspect of the present invention is directed towards a device including the features of the seventeenth aspect, wherein the central processing unit is arranged to control the copying of all data from the non-volatile memory to the working memory.

A twenty-second aspect of the present invention is directed towards a device including the features of the twenty-first aspect, where the area of the security data in the non-volatile memory is pre-defined and pre-stored in the device for blocking write attempts and the monitoring unit when activating a blocking is triggered by a first detection of copying of security data from the pre-defined area in the non-volatile memory to an area of the working memory and activating a blocking for that area of the working memory.

A twenty-third aspect of the present invention is directed towards a device including the features of the seventeenth aspect, wherein the monitoring unit is arranged to block write attempts by changing the destination address of data transferred to the working memory.

A twenty-fourth aspect of the present invention is directed towards a device including the features of the seventeenth aspect, further comprising a debugging unit and wherein the monitoring unit is arranged to disconnect the debugging unit at least when the security data is copied to the working memory and to reconnect the debugging unit when the blocking has been activated.

A twenty-fifth aspect of the present invention is directed towards a device including the features of the seventeenth aspect, wherein the device for blocking write attempts is implemented in hardware.

A twenty-sixth aspect of the present invention is directed towards a device including the features of the seventeenth aspect, wherein the device is a portable communication device.

A twenty-seventh aspect of the present invention is directed towards a device including the features of the twenty-sixth aspect, wherein the device is a cellular phone.

The invention has the following advantages. It enables the storage of security data in a working memory without risking tampering of this data, which is guaranteed by the independence from the central processing unit. Another advantage is that cheaper memories therefore can be used instead of the memories that would otherwise be needed. It also allows the possibility to keep a debugging unit in the electronic data processing device for debugging software loaded in the device without having to compromise the safety of the security data.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a block schematic of an electronic processing device including a device for blocking write attempts both according to a first embodiment of the invention,
fig. 2 shows a flow chart of a method according to the first embodiment of the invention,
fig. 3 shows a block schematic of an electronic processing device including a device for blocking write attempts both according to a second embodiment of the invention, and
fig. 4 shows a flow chart of a method according to the second embodiment of the invention.

### DETAILED DESCRIPTION OF EMBODIMENTS

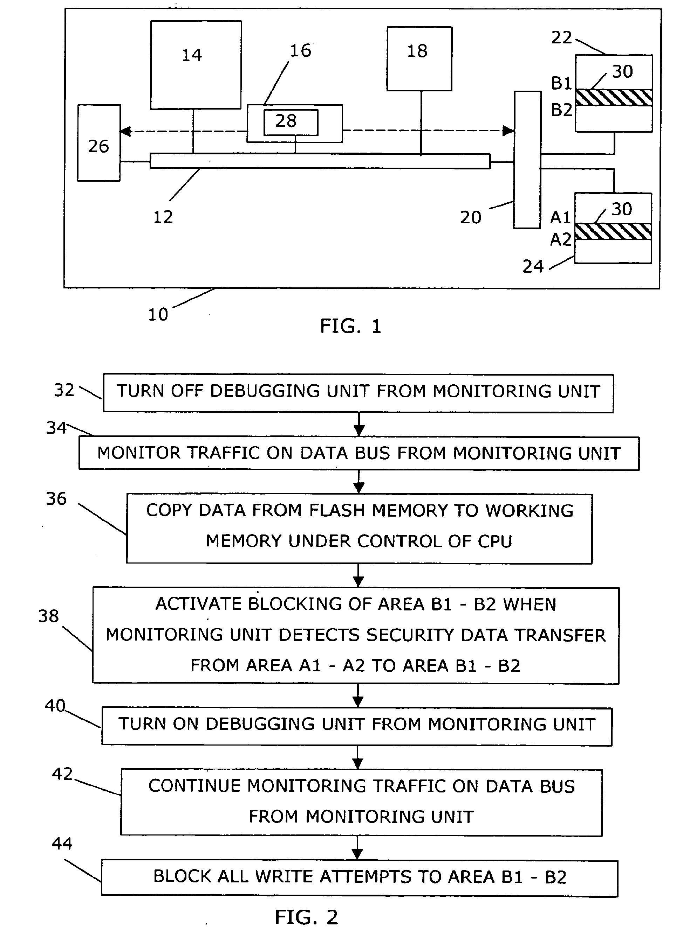

An electronic data processing device 10 according to a first embodiment of the invention is shown in a block schematic in fig. 1. The device is preferably provided in a portable communication device and in the preferred embodiment the device is provided in a cellular phone and then a so-called smartphone. A cellular phone is just one example of where the invention can be implemented. The invention can for instance also be used in a PDA (personal digital assistant), a palm top computer, a lap top computer and in a PC (personal Computer). The device where the electronic data processing device according to the invention is implemented should however have functionality for secure transferring and transactions.

The device 10 includes a communication bus 12 to which are connected a central processing unit 14, a device for blocking write attempts 16, a ROM memory 18 and an interface 20 towards external memories. The device 16 includes a monitoring unit 28, the functioning of which will be described in more detail layer. To the interface 20 are connected a working memory 22, which preferably is a volatile so-called SD RAM memory and a non-volatile NAND flash memory 24. A debugging unit 26 is also connected to the bus 12. The NAND flash memory includes an area defined by memory addresses A1 and A2, which area comprises security data 30 in the form of private cryptographic keys. The working memory 22 includes a corresponding area defined by memory addresses B1 and B2, which is to receive the private security keys.

The main functioning of the electronic data processing device is, as is well known to the man skilled in the art, to execute software stored in different memories under the control of the central processing unit. Some such software can be some type of transactions software originally stored in the NAND flash memory. The information on a NAND flash memory cannot be used directly, but this information has to be transferred to a working memory before being used. If this is done in a straight-forward way, without taking necessary precautions, this data can be tampered with, which is highly undesirable if the data includes private keys to be used in for instance transactions involving money. One such source of tampering can be the debugging unit, which is connected to the device in order to debug faulty programs. This debugging unit often has contact with other devices, like computers and servers and can take control of the central processing unit of the electronic processing device and is therefore a potential safety risk for the data that is transferred.

The device and method according to a first embodiment of the invention takes care of some of these safety aspects. Therefore the performance of the device according to this first embodiment will now be explained with reference being made to fig. 2, which shows a flow chart of a method according to this first embodiment of the invention.

At start-up of the device 10 the data in the flash memory 24 has to be transferred to the working memory 22, which in this first embodiment is done under the control of the central processing unit 14. Before this is done, the monitoring unit 28 in device for blocking write attempts 16 disconnects or turns off the debugging unit 26, step 32, in order to safeguard that the security keys in the flash memory 24 will not be tampered with after copying. This turning off is thus done independently from the central processing unit 14. Thereafter the monitoring unit 28 monitors the traffic on the bus 12, step 34. Traffic on the bus is sent using source and destination addresses. As mentioned before the copying of data is performed under the control of the central processing unit 14, step 36. This unit 14 therefore controls the ROM memory 18, which includes transferral codes for transferring all the data in the flash memory 24 to the working memory 22. Here the data from the flash memory 24 can be stored in any position in the working memory 22. The content of the flash memory 24 is transferred sequentially. The monitoring unit 28 is set to look out for the memory addresses A1 and A2 defining the area of the security keys 30 in the flash memory on the data bus 12. This information is pre-set and pre-stored in the monitoring unit 28 and therefore provided beforehand in the monitoring unit 28. When the first of the information is transferred from address A1 to address B1 in the working memory, the monitoring unit begins activating blocking through storing the destination address B1. It then waits until the last address A2 of the area is transferred to destination address B2, which it also stores. The monitoring unit then locks the data area B1 - B2 of the working memory 22, since then the keys 30 have been copied. In this way blocking of the address area defined by addresses B1 and B2 was activated by the monitoring unit upon the first detection of data transfer from the area defined by addresses A1 and A2, step 38. The monitoring unit then reconnects or turns on the debugging unit 26, step 40, so that it can function yet again. After this the monitoring unit 28 continues monitoring all the traffic on the bus, step 42, and blocks all attempts to write to the area defined by addresses B1 and B2, step 44. This blocking is normally done through controlling the interface 20 to change address whenever a write command to any address in the area is encountered. Steps 38 - 44 are all performed by the monitoring unit independently of the central processing unit 14. The device 16 including the monitoring unit 28 is provided in the form of hardware in the form of suitably selected and connected logic circuits. This makes the device 16 work fast. Another advantage is that the functioning of it cannot be changed, which makes illegal tampering of the device hard, so that write-protection of the moved security keys can be guaranteed.

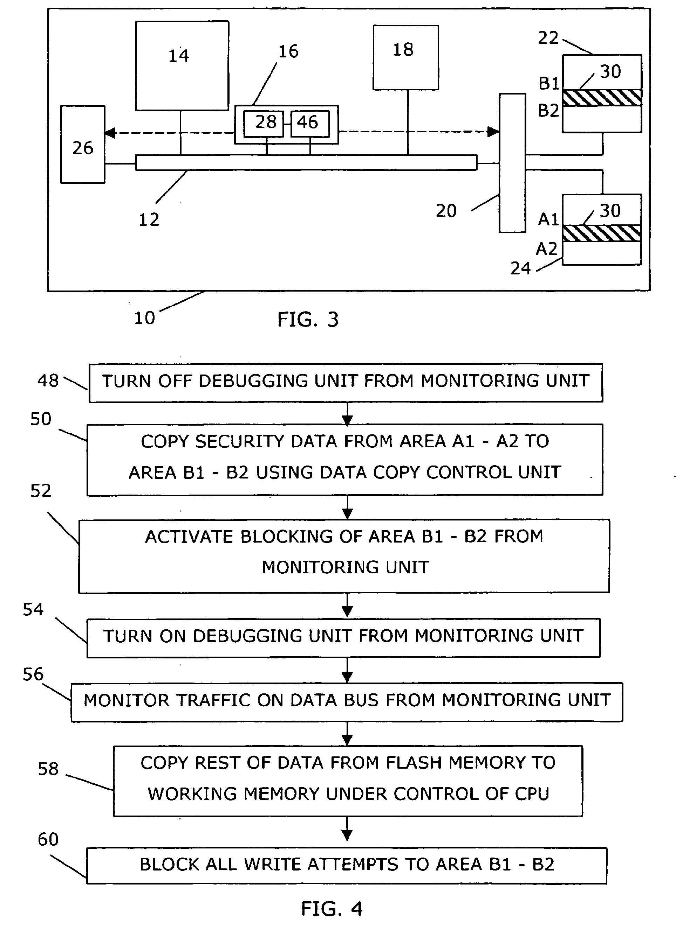

Now a second embodiment of the invention will be described with reference being made to fig. 3 and 4. Fig. 3 shows a device 10 that is similar to the device in fig. 1. There is only one difference here and that is that the device for blocking write attempts 16 also includes a copy control unit 46. This unit 46, which in this embodiment is a DMA (Direct Memory Access) unit, takes care of the transfer of the keys in the area A1 - A2 in the flash memory 24 to the area B1 - B2 of the working memory 22. As in the first embodiment, the monitoring unit 28 in device 16 here disconnects or turns off the debugging unit 26, step 48, in order to safeguard that the private security keys 30 in the flash memory 24 will not be tampered with after copying. Thereafter the copy control unit 46 copies the keys 30 in the area defined by addresses A1 and A2 in the flash memory 24 to the area defined by addresses B1 and B2 in the working memory 22, step 50. In this case both the addresses A1 - A2 and addresses B1 - B2 are pre-defined and pre-stored in the copy control unit 46 and therefore provided beforehand. The copy control unit 46 here also transfer this content sequentially. When the copy control unit 46 has copied these addresses it notifies the monitoring unit 28, which then goes on and activates blocking of the area defined by addresses B1 and B2, step 52. The monitoring unit 28 can also have these addresses B1 and B2 pre-stored or receive them from the copy control unit 46 upon signalling of finished copying. The monitoring unit 28 then reconnects or turns on the debugging unit 26, step 54, so that it can function yet again. Thereafter the monitoring unit 28 starts monitoring all the traffic on the data bus, step 56. The central processing unit 14 transfers the rest of the content from the flash memory 24 to the working memory 22, step 58, which is done in the same way as was described in relation to the first embodiment. The monitoring unit 28 then blocks all attempts to write to the area defined by addresses B1 and B2, step 60. This blocking is done in the same way as was described in the first embodiment. Steps 48 - 56 and 60 are all performed by the monitoring unit independently of the central processing unit. The device for blocking write attempts 16 including the copy control unit 46 and the monitoring unit 28 is also here provided in the form of hardware for making illegal tampering of the device hard, so that write-protection of the moved security keys can be guaranteed.

When the electronic data processing device is turned off, the working memory is emptied, which means that the data in the flash memory has to be transferred each time the device is turned on again or rebooted.

The present invention has many advantages. It enables the storage of the private security keys in a working memory without risking tampering of these keys, which is guaranteed by the independence of the central processing units. Another advantage is that cheaper memories therefore can be used instead of the memories that would otherwise be needed. It also allows the possibility to keep a debugging unit in the device for debugging software loaded in the device without having to compromise the safety of the security keys.

The present invention can be varied in many ways. The different method steps do not necessarily all have to be provided in the order described. It is however essential that the debugging unit is turned off before the keys are transferred and that the activating of a blocking or locking follows immediately after the transfer of the keys. The flash memory can be included in the device or be an external memory that is connected to the device. It can also include other data than the keys and any software associated with the keys. The working memory can of course also include other types of information. It is possible that the flash memory, in the first described embodiment can have the addresses of the defined area in the working memory stored at a specific location, which location the ROM memory then can access for finding out the destination address of the security keys. The invention is furthermore not limited to private security keys, but can be applied on any data that needs to be write-protected. In view of this the present invention is therefore only to be limited by the following claims.

## Claims

1. Method of transferring data from a non-volatile memory (24) to a working memory (22) of an electronic data processing device (10), comprising the steps of:
copying security data (30) from the non-volatile memory to the working memory, which security data is to be write-protected, (steps 36; 50, 58), activating a blocking function for the security data in the working memory, (step 38; 52), which step of activating is triggered by the copying being made to the working memory,
monitoring all communication with the working memory, (steps 34, 42; 56), and
blocking all write attempts to the copied security data stored in the working memory according to the blocking function, (steps 44; 60),
wherein at least the steps of activating a blocking function, monitoring communication and blocking write attempts are performed independently of the central processing unit (14) of the data processing device, such that the central processing unit cannot manipulate the security data.

2. Method according to claim 1, wherein the area (A1, A2) of the security data in the non-volatile memory is pre-defined and pre-stored in a device for blocking write attempts (16) and used at least in relation to activating a blocking function.

3. Method according to claim 1 or 2, wherein the step of copying data comprises copying only the security data from the non-volatile memory to the working memory independently of the central processing unit of the data processing device (step 50) and copying any further data under the control of the central processing unit of the device (step 58).

4. Method according to claim 3, wherein the area (A1, A2) of the security data in the non-volatile memory and the area (B1, B2) for storage of the security data in the working memory are pre-defined and wherein the step of activating a blocking function is triggered by the copying being made to the pre-defined area in the working memory and the blocking function is activated for that area of the working memory.

5. Method according to claim 1 or 2, wherein the step of copying comprises copying all data from the non-volatile memory to the working memory under the control of the central processing unit of the device (step 36).

6. Method according to claim 5, wherein the area (A1, A2) of the security data in the non-volatile memory is pre-defined and wherein the step of activating a blocking function is triggered by a first detection of copying of security data from the pre-defined area in the non-volatile memory to an area (B1, B2) of the working memory and the blocking function is activated for that area of the working memory.

7. Method according to any previous claim, wherein the blocking function comprises changing the destination address of the data transferred to the working memory.

8. Method according to any previous claim, further comprising the steps of disconnecting a debugging unit (step 32; 48) at least when copying the security data to the working memory and reconnecting the debugging unit (step 40; 54) when the blocking function has been activated.

9. Device (16) for blocking write attempts to security data (30) transferred from a non-volatile memory (24) to a working memory (22) in an electronic data processing environment (10) that includes a central processing unit (14) and comprising a monitoring unit (28) arranged to:
activate a blocking function for security data in the working memory, which activation is triggered by a copying of the security data being made from the non-volatile memory to the working memory,
monitor all communication with the working memory, and
block all write attempts to the copied security data stored in the working memory according to the blocking function,
all performed independently of the central processing unit of the data processing environment such that the central processing unit cannot manipulate the security data.

10. Device according to claim 9, wherein the area (A1, A2) of the security data in the non-volatile memory is pre-defined and pre-stored in the device and used in relation at least to activating a blocking function.

11. Device according to claim 9 or 10, further comprising a copy control unit (46) arranged to copy the security data from the non-volatile memory to the working memory also independently of the central processing unit of the data processing environment.

12. Device according to claim 11, where the area (A1, A2) of the security data in the non-volatile memory and the area (B1, B2) for storage of the security data in the working memory are pre-defined and pre-stored in the device and the monitoring unit when activating a blocking function is triggered by the copying being made to the pre-defined area in the working memory and the blocking function is activated for that area of the working memory.

13. Device according to claim 9 or 10, where the area of the security data (A1, A2) in the non-volatile memory is pre-defined and pre-stored in the device and the monitoring unit when activating a blocking function is triggered by a first detection of copying of security data from the pre-defined area in the non-volatile memory to an area (B1, B2) of the working memory and the blocking function is activated for that area of the working memory.

14. Device according to any of claims 9 - 13, wherein the blocking function of the monitoring unit comprises blocking write attempts by changing the destination address of data transferred to the working memory.

15. Device according to any of claims 9 - 14, wherein the monitoring unit is arranged to disconnect a debugging unit (26) of the electronic data processing environment at least when the security data is copied to the working memory and to reconnect the debugging unit when the blocking has been activated.

16. Device according to any of claims 9 - 15, wherein it is implemented in hardware.

17. Electronic data processing device (10) comprising a non-volatile memory (24) comprising data including security data (30) to be write-protected, a working memory (22), a central processing unit (14) arranged to control copying of at least some data from the non-volatile memory to the working memory and a device for blocking write attempts (16) to security data according to any of claims 9 - 16.

18. Electronic data processing device according to claim 17, wherein the device is a portable communication device.

19. Electronic data processing device according to claim 18, wherein the device is a cellular phone.

## Patentansprüche

1. Verfahren zum Übertragen von Daten aus einem nichtflüchtigen Speicher (24) in einen Arbeitsspeicher (22) einer elektronischen Datenverarbeitungsvorrichtung (10) mit den folgenden Schritten:
Kopieren von Sicherheitsdaten (30) von dem nichtflüchtigen Speicher in den Arbeitsspeicher, wobei die Sicherheitsdaten schreibgeschützt sein sollen (Schritte 36; 50, 58),
Aktivieren einer Blockierfunktion für die Sicherheitsdaten in dem Arbeitsspeicher (Schritt 38; 52), wobei der Schritt des Aktivierens durch das Kopieren in den Arbeitsspeicher getriggert wird;
Überwachen der gesamten Kommunikation mit dem Arbeitsspeicher (Schritte 34, 42; 56), und
Blockieren aller Schreibversuche auf die kopierten Sicherheitsdaten, die in dem Arbeitsspeicher gespeichert sind, gemäß der Blockierfunktion (Schritte 44; 60),
wobei zumindest die Schritte des Aktivierens einer Blockierfunktion, des Überwachens der Kommunikation und des Blockierens der Schreibversuche unabhängig von der Zentralverarbeitungseinheit (14) der Datenverarbeitungsvorrichtung durchgeführt werden, so dass die Zentralverarbeitungseinheit die Sicherheitsdaten nicht manipulieren kann.

2. Verfahren nach Anspruch 1, wobei der Bereich (A1, A2) der Sicherheitsdaten in dem nichtflüchtigen Speicher in einer Vorrichtung zum Blockieren von Schreibversuchen (16) vordefiniert und vorab gespeichert wird und zumindest mit Bezug zu dem Aktivieren einer Blockierfunktion verwendet wird.

3. Verfahren nach Anspruch 1 oder 2, wobei der Schritt des Kopierens von Daten das Kopieren lediglich der Sicherheitsdaten von dem nichtflüchtigen Speicher in den Arbeitsspeicher unabhängig von der Zentralverarbeitungseinheit der Datenverarbeitungsvorrichtung (Schritt 50) und das Kopieren von weiteren Daten unter der Steuerung der Zentralverarbeitungseinheit der Vorrichtung (Schritt 58) umfasst.

4. Verfahren nach Anspruch 3, wobei der Bereich (A1, A2) der Sicherheitsdaten in dem nichtflüchtigen Speicher und der Bereich (B1, B2) für den Speicher der Sicherheitsdaten in dem Arbeitsspeicher vordefiniert wird, und wobei der Schritt des Aktivierens einer Blockierfunktion durch das Kopieren in den vorbestimmten Bereich in dem Arbeitsspeicher getriggert wird, und wobei die Blockierfunktion für diesen Bereich des Arbeitsspeichers aktiviert wird.

5. Verfahren nach Anspruch 1 oder 2, wobei der Schritt des Kopierens das Kopieren der gesamten Daten von dem nichtflüchtigen Speicher in den Arbeitsspeicher unter der Steuerung der Zentralverarbeitungseinheit der Vorrichtung (Schritt 36) umfasst.

6. Verfahren nach Anspruch 5, wobei der Bereich (A1, A2) der Sicherheitsdaten in dem nichtflüchtigen Speicher vordefiniert wird und wobei der Schritt des Aktivierens einer Blockierfunktion durch eine erste Detektion des Kopierens von Sicherheitsdaten von dem vorbestimmten Bereich in den nichtflüchtigen Speicher in einen Bereich (B1, B2) des Arbeitsspeichers getriggert wird und wobei die Blockierfunktion für diesen Bereich des Arbeitsspeichers aktiviert wird.

7. Verfahren nach einem der vorangehenden Ansprüche, wobei die Blockierfunktion das Ändern der Zieladresse der in den Arbeitsspeicher übertragenen Daten umfasst.

8. Verfahren nach einem der vorangehenden Ansprüche, das weiterhin die Schritte des Trennens einer Debugger-Einheit (Schritt 32; 48) umfasst, zumindest wenn die Sicherheitsdaten in den Arbeitsspeicher kopiert werden, und das erneute Verbinden der Debugger-Einheit (Schritt 40; 54), wenn die Blockierfunktion aktiviert worden ist.

9. Vorrichtung (16) zum Blockieren von Schreibversuchen auf Sicherheitsdaten (30), die von einem nichtflüchtigen Speicher (24) in einen Arbeitsspeicher (22) in einer elektronischen Datenverarbeitungseinrichtung (10), die eine Zentralverarbeitungseinheit (14) umfasst, übertragen werden, und die eine Überwachungseinheit (28) umfasst, die ausgebildet ist, um:
eine Blockierfunktion zum Blockieren von Sicherheitsdaten in dem Arbeitsspeicher zu aktivieren, wobei die Aktivierung durch ein Kopieren der Sicherheitsdaten von dem nichtflüchtigen Speicher in den Arbeitsspeicher getriggert wird,
die gesamte Kommunikation mit dem Arbeitsspeicher zu überwachen, und
alle Schreibversuche auf die kopierten Sicherheitsdaten, die in dem Arbeitsspeicher gespeichert sind, gemäß der Blockierfunktion zu blockieren,
wobei dieses vollständig unabhängig von der Zentralverarbeitungseinheit der Datenverarbeitungseinrichtung durchgeführt wird, so dass die Zentralverarbeitungseinheit die Sicherheitsdaten nicht manipulieren kann.

10. Vorrichtung nach Anspruch 9, wobei der Bereich (A1, A2) der Sicherheitsdaten in dem nichtflüchtigen Speicher in der Vorrichtung vordefiniert und vorab gespeichert ist und mit Bezug auf mindestens das Aktivieren einer Blockierfunktion verwendet wird.

11. Vorrichtung nach Anspruch 9 oder 10, die weiterhin eine Kopiersteuereinheit (46) umfasst, die ausgebildet ist, um die Sicherheitsdaten von dem nichtflüchtigen Speicher in den Arbeitsspeicher ebenfalls unabhängig von der Zentralverarbeitungseinheit der Datenverarbeitungseinrichtung zu kopieren.

12. Vorrichtung nach Anspruch 11, wobei der Bereich (A1, A2) der Sicherheitsdaten in dem nichtflüchtigen Speicher und der Bereich (B1, B2) zum Speichern der Sicherheitsdaten in dem Arbeitsspeicher in der Vorrichtung vordefiniert und vorab gespeichert werden, und wobei die Überwachungseinheit durch das Kopieren in den vordefinierten Bereich in dem Arbeitsspeicher getriggert wird, wenn eine Blockierfunktion aktiviert wird, und wobei die Blockierfunktion für diesen Bereich des Arbeitsspeichers aktiviert wird.

13. Vorrichtung nach Anspruch 9 oder 10, wobei der Bereich der Sicherheitsdaten (A1, A2) in dem nichtflüchtigen Speicher in der Vorrichtung vordefiniert und vorab gespeichert ist, und wobei die Überwachungseinheit, wenn eine Blockierfunktion aktiviert wird, durch eine erste Detektion des Kopierens von Sicherheitsdaten von dem vordefinierten Bereich in den nichtflüchtigen Speicher in einen Bereich (B1, B2) des Arbeitsspeichers getriggert wird und die Blockierfunktion für diesen Bereich des Arbeitsspeichers aktiviert wird.

14. Vorrichtung nach einem der Ansprüche 9 bis 13, wobei die Blockierfunktion der Überwachungseinheit das Blockieren von Schreibversuchen umfasst, indem die Zieladresse der Daten, die in den Arbeitsspeicher übertragen werden, geändert wird.

15. Vorrichtung nach einem der Ansprüche 9 bis 14, wobei die Überwachungseinheit ausgebildet ist, um eine Debugger-Einheit (26) von der elektronischen Datenverarbeitungseinrichtung zu trennen, zumindest wenn die Sicherheitsdaten in den Arbeitsspeicher kopiert werden, und um die Debugger-Einheit erneut zu verbinden, wenn das Blockieren aktiviert worden ist.

16. Vorrichtung nach einem der Ansprüche 9 bis 15, wobei diese in Hardware implementiert wird.

17. Elektronische Datenverarbeitungsvorrichtung (10) umfassend einen nichtflüchtigen Speicher (24), der Daten, einschließlich Sicherheitsdaten (30), die schreibgeschützt sein sollen, umfasst, einen Arbeitsspeicher (22), eine Zentralverarbeitungseinheit (14), die ausgebildet ist, um das Kopieren von mindestens einigen Daten aus dem nichtflüchtigen Speicher in den Arbeitsspeicher zu steuern, und eine Vorrichtung zum Blockieren von Schreibversuchen (16) auf Sicherheitsdaten gemäß einem der Ansprüche 9 bis 16 umfasst.

18. Elektronische Datenverarbeitungsvorrichtung gemäß Anspruch 17, wobei die Vorrichtung ein tragbares Kommunikationsgerät ist.

19. Elektronische Datenverarbeitungsvorrichtung nach Anspruch 18, wobei die Vorrichtung ein Mobiltelefon ist.

## Revendications

1. Procédé pour transférer des données à partir d'une mémoire non volatile (24) vers une mémoire de travail (22) d'un dispositif de traitement de données électronique (10), comprenant les étapes suivantes:
copier des données de sécurité (30) à partir de la mémoire non volatile vers la mémoire de travail, ces données de sécurité devant être protégées en écriture (étapes 36 ; 50, 58),
activer une fonction de blocage pour les données de sécurité dans la mémoire de travail (étapes 38 ; 52), cette étape d'activation étant déclenchée par la copie effectuée vers la mémoire de travail;
surveiller toute la communication avec la mémoire de travail (étapes 34, 42 ; 56), et
bloquer toutes les tentatives d'écriture sur les données de sécurité copiées qui sont stockées dans la mémoire de travail, conformément à la fonction de blocage (étapes 44; 60),
dans lequel au moins les étapes d'activation d'une fonction de blocage, de surveillance de communication et de blocage de tentatives d'écriture sont effectuées indépendamment de l'unité centrale de traitement (14) du dispositif de traitement de données, de façon que l'unité centrale de traitement ne puisse pas manipuler les données de sécurité.

2. Procédé selon la revendication 1, dans lequel la zone (A1, A2) des données de sécurité dans la mémoire non volatile est prédéfinie et préstockée dans un dispositif pour bloquer des tentatives d'écriture (16), et utilisée au moins en relation avec l'activation d'une fonction de blocage.

3. Procédé selon la revendication 1 ou 2, dans lequel l'étape de copie de données comprend les opérations consistant à copier seulement les données de sécurité à partir de la mémoire non volatile vers la mémoire de travail, indépendamment de l'unité centrale de traitement du dispositif de traitement de données (étape 50), et à copier n'importe quelles données supplémentaires sous la commande de l'unité centrale de traitement du dispositif (étape 58).

4. Procédé selon la revendication 3, dans lequel la zone (A1, A2) des données de sécurité dans la mémoire non volatile et la zone (B1, B2) pour le stockage des données de sécurité dans la mémoire de travail sont prédéfinies, et dans lequel l'étape d'activation d'une fonction de blocage est déclenchée par l'accomplissement de l'opération de copie vers la zone prédéfinie dans la mémoire de travail, et la fonction de blocage est activée pour cette zone de la mémoire de travail.

5. Procédé selon la revendication 1 ou 2, dans lequel l'étape de copie comprend l'opération consistant à copier toutes les données à partir de la mémoire non volatile vers la mémoire de travail sous la commande de l'unité centrale de traitement du dispositif (étape 36).

6. Procédé selon la revendication 5, dans lequel la zone (A1, A2) des données de sécurité dans la mémoire non volatile est prédéfinie, et dans lequel l'étape d'activation d'une fonction de blocage est déclenchée par une première détection d'opération de copie de données de sécurité à partir de la zone prédéfinie dans la mémoire non volatile vers une zone (B1, B2) de la mémoire de travail, et la fonction de blocage est activée pour cette zone de la mémoire de travail.

7. Procédé selon l'une quelconque des revendications précédentes, dans lequel la fonction de blocage comprend le changement de l'adresse de destination des données transférées vers la mémoire de travail.

8. Procédé selon l'une quelconque des revendications précédentes, comprenant en outre les étapes consistant à déconnecter une unité de débogage (étapes 32; 48) au moins pendant l'opération de copie des données de sécurité vers la mémoire de travail, et à reconnecter l'unité de débogage (étapes 40; 54) lorsque la fonction de blocage a été activée.

9. Dispositif (16) pour bloquer des tentatives d'écriture portant sur des données de sécurité (30) transférées à partir d'une mémoire non volatile (24) vers une mémoire de travail (22) dans un environnement de traitement de données électronique (10) qui inclut une unité centrale de traitement (14) et comprend une unité de surveillance (28) agencée pour :
activer une fonction de blocage pour des données de sécurité dans la mémoire de travail, cette activation étant déclenchée par l'accomplissement d'une opération de copie des données de sécurité à partir de la mémoire non volatile vers la mémoire de travail,
surveiller toute la communication avec la mémoire de travail, et
bloquer toutes les tentatives d'écriture portant sur les données de sécurité copiées qui sont stockées dans la mémoire de travail, conformément à la fonction de blocage,
tout ceci étant effectué indépendamment de l'unité centrale de traitement de l'environnement de traitement de données, de façon que l'unité centrale de traitement ne puisse pas manipuler les données de sécurité.

10. Dispositif selon la revendication 9, dans lequel la zone (A1, A2) des données de sécurité dans la mémoire non volatile est prédéfinie et préstockée dans le dispositif et utilisée en relation avec au moins l'activation d'une fonction de blocage.

11. Dispositif selon la revendication 9 ou 10, comprenant en outre une unité de commande de copie (46) agencée pour copier les données de sécurité à partir de la mémoire non volatile vers la mémoire de travail également de façon indépendante de l'unité centrale de traitement de l'environnement de traitement de données.

12. Dispositif selon la revendication 11, dans lequel la zone (A1, A2) des données de sécurité dans la mémoire non volatile et la zone (B1, B2) pour le stockage des données de sécurité dans la mémoire de travail sont pré-définies et préstockées dans le dispositif, et lorsque l'unité de surveillance active une fonction de blocage, elle est déclenchée par l'opération de copie qui est effectuée dans la zone prédéfinie dans la mémoire de travail, et la fonction de blocage est activée pour cette zone de la mémoire de travail.

13. Dispositif selon la revendication 9 ou 10, dans lequel la zone des données de sécurité (A1, A2) dans la mémoire non volatile est prédéfinie et préstockée dans le dispositif, et lorsque l'unité de surveillance active une fonction de blocage, elle est déclenchée par une première détection d'une opération de copie de données de sécurité à partir de la zone prédéfinie dans la mémoire non volatile, vers une zone (B1, B2) de la mémoire de travail, et la fonction de blocage est activée pour cette zone de la mémoire de travail.

14. Dispositif selon l'une quelconque des revendications 9 à 13, dans lequel la fonction de blocage de l'unité de surveillance comprend le blocage de tentatives d'écriture par le changement de l'adresse de destination de données transférées vers la mémoire de travail.

15. Dispositif selon l'une quelconque des revendications 9 à 14, dans lequel l'unité de surveillance est agencée pour déconnecter une unité de débogage (26) de l'environnement de traitement de données électronique au moins lorsque les données de sécurité sont copiées vers la mémoire de travail, et pour reconnecter l'unité de débogage lorsque le blocage a été activé.

16. Dispositif selon l'une quelconque des revendications 9 à 15, ce dispositif étant mis en oeuvre par matériel.

17. Dispositif de traitement de données électronique (10) comprenant une mémoire non volatile (24) comprenant des données incluant des données de sécurité (30) devant être protégées en écriture, une mémoire de travail (22), une unité centrale de traitement (14) agencée pour commander l'opération de copie d'au moins certaines données à partir de la mémoire non volatile vers la mémoire de travail, et un dispositif pour bloquer des tentatives d'écriture (16) portant sur des données de sécurité, en conformité avec l'une quelconque des revendications 9 à 16.

18. Dispositif de traitement de données électronique selon la revendication 17, dans lequel le dispositif est un dispositif de communication portable.

19. Dispositif de traitement de données électronique selon la revendication 18, dans lequel le dispositif est un téléphone cellulaire.
